# EUROPEAN PATENT APPLICATION

(11) **EP 4 461 421 A1**
(43) Date of publication of application: **13.11.2024**
(21) Application number: 23747050.5
(22) Date of filing: 26.01.2023
(51) Int. Cl.: B05D 1/02, B05D 5/00, B05D 7/24, B32B 5/24, B32B 27/02, G10K 11/16, G10K 11/162, G10K 11/168

(54) **SOUND ABSORBING STRUCTURE CONSTRUCTION METHOD, STACK, STACK PRODUCTION METHOD, AND SOUND ABSORBING MATERIAL**

(30) Priority: 27.01.2022 JP 2022011242; 30.08.2022 JP 2022137300
(71) Applicant: Inoac Technical Center Co., Ltd., Nagoya-shi, Aichi 450-0003 (JP)
(72) Inventor: HAYAKAWA, Hiroki, Hadano-shi, Kanagawa 259-1304 (JP); MIYATA, Atsushi, Hadano-shi, Kanagawa 259-1304 (JP); OTA, Hideo, Hadano-shi, Kanagawa 259-1304 (JP)
(74) Representative: Fuchs Patentanwälte Partnerschaft mbB
(86) International application number: PCT/JP2023/002519
(87) International publication number: WO 2023/145840

(57) **Abstract**

Provided is a method for constructing a sound absorbing structure, which is superior in performance. An embodiment of the present invention provides a method for constructing a sound absorbing structure, including spraying an object with a hot-melt resin that is in a melted condition and has a melt viscosity of 200,000 mPa·s or less at 180 °C, thereby forming a resin fiber layer as a sound absorbing material.

## Description

### TECHNICAL FIELD

The present invention relates to a method for constructing a sound absorbing structure, a layered product, a method for producing a layered product, and a sound absorbing material.

### BACKGROUND ART

It is conducted to dispose a sound absorbing material(s) in various places of an automobile to suppress noise (external noise and noise derived from vibration during driving).

For example, Patent Document 1 discloses a technology of using a non-woven fabric web as a sound absorbing material.

### CITATION LIST

### PATENT LITERATURE

Patent Literature 1: Japanese Patent Application Publication 2017-160575

### SUMMARY OF INVENTION

### TECHNICAL PROBLEM

However, sound absorbing members and methods for constructing sound absorbing structures according to prior arts have been insufficient in performance.

Therefore, an object of the present invention is to provide a method for constructing a sound absorbing structure that is superior in performance.

Furthermore, an object of the present invention is to provide a layered product that is preferably usable as a sound absorbing material, a method for producing the layered product, and the sound absorbing material.

### SOLUTION TO PROBLEM

The present inventors have conducted an eager study and have found that the above problems can be solved by a layered product having a structure (layer) formed of a specific component, thereby completing the present invention. That is, the present invention is as follows.

According to an embodiment of the present invention, there is provided a method for constructing a sound absorbing structure, including spraying an object with a hot-melt resin that is in a melted condition and has a melt viscosity of 200,000 mPa·s or less at 180 °C, thereby forming a resin fiber layer as a sound absorbing material.

According to another embodiment of the present invention, there is provided a method for producing a layered product including a substrate and a resin fiber layer,
the method including the step of forming the resin fiber layer by spraying a hot-melt resin onto the substrate wherein the hot-melt resin is in a melted condition and has a melt viscosity of 200,000 mPa·s or less at 180 °C.

The resin fiber layer may be a sound absorbing material.

According to another embodiment of the present invention, there is provided a sound absorbing material, including a resin fiber layer that is formed of a hot-melt resin having a melt viscosity of 200,000 mPa·s or less at 180 °C.

According to another embodiment of the present invention, there is provided a layered product, including a resin fiber layer that is formed of a hot-melt resin having a melt viscosity of 200,000 mPa·s or less at 180 °C; and a substrate,
wherein the resin fiber layer is fused onto the substrate.

### ADVANTAGEOUS EFFECTS OF THE INVENTION

According to the present invention, it is possible to provide a method for constructing a sound absorbing structure, which is superior in performance.

According to the present invention, it is possible to provide a layered product that is preferably usable as a sound absorbing material, a method for producing the layered product, and the sound absorbing material.

### BRIEF DESCRIPTION OF THE DRAWINGS

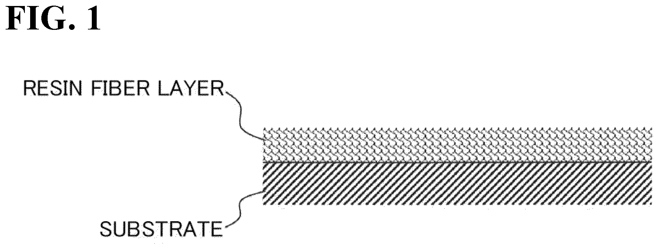

FIG. 1 is a schematic side view of a layered product according to the present embodiment.

### DESCRIPTION OF EMBODIMENTS

In the following, a layered product that is suitable for a sound absorbing material, a method for producing the layered product, a method for constructing a sound absorbing structure, etc. will be described specifically, but the present invention is not limited to these.

In the present specification, when multiple upper limit values and multiple lower limit values are separately described, it is assumed that all numerical ranges that can be set by freely combining these upper and lower limits are described in the present specification.

### <<<Layered Product>>>

The layered product according to the present embodiment includes a resin fiber layer and a substrate (see FIG. 1).

### <<<Resin Fiber Layer>>>

### <<Component>>

The resin fiber layer is a fiber structure that is formed of a hot-melt resin (also referred to as hot-melt adhesive). The resin fiber layer (hot-melt resin) is fused onto the substrate such that the resin fiber layer is fixed onto the substrate.

The hot-melt resin includes a thermoplastic resin component as a main component. The hot-melt resin may include other components.

### <Thermoplastic Resin Component>

The thermoplastic resin component is a main component of the hot-melt resin constituting the resin fiber layer, and examples thereof include polyolefin, polyester, polyurethane, polyamide, polyvinyl alcohol, etc.

The thermoplastic resin component can be selected in consideration of compatibility with the material of the substrate (object). For example, when the substrate is polyolefin such as polypropylene, it is possible to increase the bonding strength between the substrate and the fiber structure by including polyolefin in the thermoplastic resin component.

From the viewpoint of enhancing the fiber structure's sound absorbing effect, workability, etc., it is preferable that the thermoplastic resin component is polyolefin.

The polyolefin is exemplified by polyethylene, polypropylene, polybutene-1, ethylenepropylene copolymer, ethylene-α-olefin copolymer, and polymer blends of these polymers with each other.

From the viewpoint of enhancing the sound absorption and adhesion to the substrate, the polyolefin is preferably polyalphaolefin, more preferably amorphous polyalphaolefin.

The polyalphaolefin refers to a polymer obtained by polymerizing α-olefin. The amorphous polyalphaolefin refers to polyalphaolefins not having a clear melting point.

As the amorphous polyalphaolefin, it is possible to use known ones, for example, those described in JP Patent No. 6001685, JP Patent No. 3153648, etc. The amorphous polyalphaolefin can be, for example, an amorphous olefinic resin made by polymerizing (or copolymerizing) propylene, ethylene, and 1-butene alone or in combination.

### <Other Components>

Examples of other components include known additives such as tackifiers, plasticizers, fillers, pigments, dyes, anti-aging agents, antioxidants, antistatic agents, flame retardants, antibacterial agents, light stabilizers, stabilizers, dispersants, solvents, hydrophilic agents, etc.

Other components can be, for example, 30 parts by mass or less, 20 parts by mass or less, 10 parts by mass or less, 5 parts by mass or less, 1 part by mass or less, or 0.1 parts by mass or less, relative to 100 parts by the hot-melt resin.

### <<<Properties/Characteristics>>>

### «Melt Viscosity»

It is preferable that the hot-melt resin constituting the resin fiber layer has a melt viscosity at 180 °C of 200,000 mPa·s or less, 100,000 mPa·s or less, 50,000 mPa·s or less, 20,000 mPa.s or less, 15,000 mPa.s or less, or 10,000 mPa.s or less.

Furthermore, it is preferable that the hot-melt resin has a melt viscosity at 180 °C of 1,000 mPa·s or greater, 2,000 mPa·s or greater, or 5,000 mPa·s or greater.

It is preferable that the hot-melt resin constituting the resin fiber layer has a melt viscosity at 200 °C of 100,000 mPa·s or less, 50,000 mPa·s or less, 25,000 mPa·s or less, 15,000 mPa·s or less, or 10,000 mPa·s or less.

Furthermore, it is preferable that the hot-melt resin has a melt viscosity at 200 °C of 500 mPa.s or greater, 1,000 mPa.s or greater, 1,500 mPa.s or greater, or 3,000 mPa.s or greater.

By setting the melt viscosity of the hot-melt resin in such range, it is easy to spray the hot-melt resin and is likely to obtain a resin fiber layer superior in sound absorption.

Melt viscosity is assumed to have been measured on a hot-melt resin heated to a predetermined temperature using a parallel plate rheometer at a swing angle of 10 % and an angular frequency of 1 rad/s.

### «Crystallization Temperature/Crystallization Energy»

The crystallization temperature of the hot-melt resin constituting the resin fiber layer is preferably 50-150 °C, 75-125 °C, or 90-110 °C. By setting it in such range, it is possible to improve workability, sound absorption, etc. in a well-balanced manner.

Crystallization energy (crystallization heat) of the hot-melt resin is preferably 0.1-50 mJ/mg, 0.5-25 mJ/mg, or 5-15 mJ/mg. By setting it in such range, it is possible to improve workability, sound absorption, etc. in a well-balanced manner.

From the viewpoint of improving sound absorption, shape retention (e.g., the after-mentioned thickness reduction percentage), etc. in a well-balanced manner, crystallization energy (crystallization heat) of the hot-melt resin is preferably 0.1-150 mJ/mg, 20-140 mJ/mg, 50-130 mJ/mg, or 60-120 mJ/mg.

Crystallization temperature and crystallization energy are assumed to have been measured in accordance with JIS K 7121.

### <<Storage Modulus, Loss Modulus, Loss Tangent, Glass Transition Temperature>>

The lower limit value of storage modulus G' of the hot-melt resin is preferably 10 MPa or more, 20 MPa or more, 50 MPa or more, 75 MPa or more, 90 MPa or more, 100 MPa or more, 200 MPa or more, or 500 MPa or more. The upper limit value of storage modulus G' of the hot-melt resin is preferably 2000 MPa or less, 1500 MPa or less, 1000 MPa or less, or 750 MPa or less.

Loss modulus G" of the hot-melt resin is preferably 50 MPa or less or 40 MPa or less.

Loss tangent tanδ (loss modulus G''/storage modulus G') of the hot-melt resin is preferably 1.00 or less, or 0.50 or less.

Glass transition temperature of the hot-melt resin is preferably -30 to 60 °C or -25 to 40 °C.

Storage modulus G' and loss modulus G" are measured as follows.
Measurement method: rheometer
Apparatus name: MCR302 (Anton Paar)
Swing angle: 0.8°
Frequency: 10 Hz
Deformation mode: shear mode
Temperature: -50 to 110 °C
Sample size: 5 mm width × 20 mm × 1 mm thickness
Storage modulus G' and loss modulus G" are expressed in numerical values at 23 °C.

The temperature corresponding to the peak value of the above-mentioned loss tangent tanδ is defined as the glass transition temperature.

By setting the hot-melt resin's storage modulus G', loss modulus G", loss tangent tanδ, or glass transition temperature in such range, it is likely to obtain a resin fiber layer that is good in sound absorption, shape retention, workability, etc.

In particular, setting the hot-melt resin's storage modulus G' in such range is likely to lead to obtaining a resin fiber layer that is high in sound absorption and very good in shape retention.

### <<Air Permeability>>

Air permeability of the resin fiber layer is preferably 10.0 cm³/cm²/s or greater, 15.0 cm³/cm²/s or greater, 20.0 cm³/cm²/s or greater, 30.0 cm³/cm²/s or greater, 40.0 cm³/cm²/s or greater, 50.0 cm³/cm²/s or greater, 52.5 cm³/cm²/s or greater, or 55.0 cm³/cm²/s or greater.

Air permeability of the resin fiber layer is preferably 200 cm³/cm²/s or less, 150 cm³/cm²/s or less, 100 cm³/cm²/s or less, 95.0 cm³/cm²/s or less, 85.0 cm³/cm²/s or less, or 80.0 cm³/cm²/s or less.

By setting air permeability of the resin fiber layer in such range, it is possible to obtain a good sound absorbing effect.

In particular, according to the resin fiber layer formed by the hot-melt resin, when the air permeability is set in such range while using fibers with a preferable fiber diameter, the distribution of void spaces and fibers becomes appropriate, thereby obtaining a very good sound absorbing effect.

Air permeability of the resin fiber layer was measured in accordance with the air permeability test of JIS L 1096.

When the resin fiber layer is bonded to the substrate, the air permeability of the resin fiber layer can be determined by a value obtained by a method in which the same resin fiber layer (the same resin fiber layer in terms of component, structure, thickness, etc.) is formed on a release film, and then the release film is removed to produce the resin fiber layer as a single layer, followed by measuring this resin fiber layer.

### <<<Structure>>>

### <<Fiber Diameter>>

The fiber diameter of the fibers constituting the resin fiber layer can be set, for example, in 1-100 µm, 5-50 µm, or 10-40 µm. When the fiber diameter is in such range, it is possible to obtain a good sound absorbing effect. The method for calculating the fiber diameter is as follows. Firstly, the resin fiber layer is photographed with an SEM, and then the fiber diameter (width of a short axis) of 10 fibers among fibers contained in the obtained image is measured, followed by determining the average of them as the fiber diameter.

### <<Thickness>>

The thickness of the resin fiber layer can be set, for example, in 0.1-500 mm, 1-100 mm, 5-50 mm, or 10-30 mm. By setting the thickness of the resin fiber layer in such range, the production becomes easy, and a good sound absorbing effect can be obtained.

The thickness reduction percentage of the resin fiber layer is preferably 40 % or less, 30 % or less, 20 % or less, 10 % or less, or 5 % or less. If the thickness reduction percentage of the resin fiber layer is in such range, a high sound absorption is likely to be achieved for a long time.

Here, the thickness reduction percentage of the resin fiber layer is measured by the following method.

The thickness of the resin fiber layer immediately after the production (however, it is the resin fiber layer under a condition that the hot-melt resin has been sufficiently solidified) is determined as the initial thickness T_{A}.

The thickness after holding the resin fiber layer for one week (168 hours) under a constant temperature and constant humidity condition (25 °C, 50 % RH) is determined as the thickness after holding T_{B}.

The thickness reduction percentage is calculated as [(T_{A} - T_{B})/T_{A}].

When the resin fiber layer is used a sound absorbing material, the frequency band in which sound tends to be absorbed changes depending on the thickness of the resin fiber layer (for example, the peak sound absorption frequency shifts toward the low-pitched sound side by increasing the thickness of the resin fiber layer). Therefore, it is also possible to adjust the thickness in accordance with the application (environment for use) of the resin fiber layer.

### <<Basis Weight>>

The basis weight of the resin fiber layer can be set, for example, in 100-2,000 g/m², 200-1,000 g/m², or 300-750 g/m². By setting the basis weight of the resin fiber layer in such range, it is possible to obtain a good sound absorbing effect.

It is possible to adjust the fiber diameter, the basis weight, the thickness, the air permeability, etc. by the melt viscosity of the hot-melt resin, the type of the nozzle to be used when spraying the hot-melt resin, and the spraying conditions (pressure, period of time, etc.).

Since the resin fiber layer according to the present embodiment has a good sound absorption, it can be used as a sound absorbing material.

### <<<Substrate>>>

The shape of the substrate is not particularly limited, and a suitable one can be used. In particular, the resin fiber layer according to the present embodiment can be formed by only spraying the hot-melt resin. Therefore, even though a member with a complicated shape (a member with a bent portion(s), etc.) is used as the substrate, it is possible to provide a good sound absorption.

The material of the substrate is not particularly limited, and a suitable one can be used. For example, the substrate may be a composite of two or more materials (e.g., resin and metal), etc.

### <<<Method for Producing Layered Product and Method for Constructing Sound Absorbing Structure>>>

In the following, the method for producing a layered product and the method for constructing a sound absorbing structure will be described. In the method for producing a layered product, a method in which the substrate of the layered product is an object to be given sound absorption can be the method for constructing a sound absorbing structure.

The layered product can be obtained by directly spraying the hot-melt resin held in a melted condition onto the substrate. The hot-melt resin, which has become fibrous by spraying, is fused with the substrate by a contact with the substrate under a melted or soft condition, and then the hot-melt resin is solidified by cooling, thereby forming the resin fiber layer.

As the spraying method, it is possible to apply a known method, for example, curtain spray, omega spray, spiral spray, summit spray, etc.

The hot-melt resin used for the spraying can be produced by a known method. For example, the hot-melt resin can be produced by feeding the above-mentioned raw material to a continuous kneader such as a single or twin shaft extruder, or a batch-type kneader such as roll, banbury mixer, kneader, planetary mixer, or high shear Z-wing mixer and kneading at a predetermined temperature for a predetermined period of time.

For the purpose of increasing the bonding strength of the resin fiber layer to the substrate, etc. a surface treatment (washing, smoothing, roughening, electrical discharge treatment, UV treatment, etc.) for the substrate can be performed.

In the method for producing a layered product and the method for constructing a sound absorbing structure according to the present embodiment, it is not necessary to perform a heating treatment, etc. after forming the resin fiber layer, in contrast with the case of producing a layered product by heat fusion of a fiber sheet.

Here, in a conventional art in which a fiber sheet formed of a thermoplastic resin is placed on a substrate and then each layer is joined by heating and adding pressure, the fiber structure is crushed by heating and adding pressure. Therefore, it has been difficult to obtain a desired sound absorbing effect.

Furthermore, in the case of bonding a fiber sheet to a substrate at some spots by an adhesive or heat fusion, the fiber structure is crushed at bonding spots. With this, it has been impossible to obtain a desired sound absorbing effect, and it has been likely to occur exfoliation at non-bonded portions.

Furthermore, these methods contain not only the step of placing a resin fiber layer on a substrate by a predetermined means, but also the step of processing the shape of a fiber sheet suitable for the substrate by punching, etc., thereby making the operation cumbersome and reducing sound absorption by the occurrence of settling during the storage of the fiber sheet, etc.

The method for constructing a sound absorbing structure according to the present embodiment completes the construction by only a simple step of spraying the hot-melt resin onto the substrate to form the resin fiber layer and has a function that the hot-melt resin itself adheres to the substrate (the step of performing heat fusing of a nonwoven cloth or the step of performing an adhesion processing on the nonwoven cloth is not necessary). Therefore, it is possible to easily form the resin fiber layer having a good sound absorption derived from the hot-melt resin, and exfoliation hardly occurs due to a uniform surface adhesion of the resin fiber layer.

Here, a further comparison is made between the method for producing a layered product or the method for constructing a sound absorbing structure according to the present embodiment and a method for constructing a sound absorbing structure according to the conventional technology art (method for constructing a sound absorbing structure by using a non-woven fabric web formed by a melt-blown method, as a sound absorbing material) that is disclosed in JP Patent Application Publication No. 2017-160575, etc.

In the melt-blown method that is described in JP Patent Application Publication No. 2017-160575, it is necessary to have an accumulation device that accumulates blown fibers after blowing resin fibers. Such accumulation device includes a suction device that is formed of a rotating roll or belt conveyer that generally includes holes for the purpose of preventing scattering.

The method for producing a layered product or the method for constructing a sound absorbing structure according to the present embodiment can be implemented with a simple device without using an accumulation device, a suction device, etc. By no use of an accumulation device, a suction device, etc., it is possible to directly apply the raw material of the sound absorbing material to the object, thereby obtaining the layered product. Therefore, it also becomes possible to perform a direct application to a complicated shape (e.g., three dimensional shape) by an attachment of a spray nozzle to a tip of a robot arm, etc.

As mentioned above, it is assumed that the layered product according to the present embodiment obtained by spraying the hot-melt resin onto the substrate is different in adhesion area from a layered product obtained by a spot fusing of a previously prepared fiber sheet to a substrate.

More specifically, in the layered product according to the present embodiment, adhesion area of the resin fiber layer relative to the substrate is 50 % or more, 60 % or more, 70 % or more, or 80 % or more. Adhesion area of the resin fiber layer relative to the substrate can be 99 % or less, 95 % or less, or 90 % or less. The layered product according to the present embodiment has a sufficient adhesion between the substrate and the resin fiber layer, while maintaining a fiber structure, thereby demonstrating a good sound absorption.

On the other hand, a layered product obtained by a spot fusing of a fiber sheet is generally 1 % or less in adhesion area of the fiber sheet, thereby causing an easy exfoliation and a difficulty in demonstrating a good sound absorption.

Adhesion area of the resin fiber layer can be calculated by peeling fibers other than those of an adhered portion(s) from the substrate and analyzing the adhered portion(s) (a portion(s) remaining after peeling the fibers off) with a microscope.

The application location (location where the resin fiber layer is applied, or a member as the substrate of the layered product) in the method for constructing a sound absorbing structure according to the present embodiment is not particularly limited, and can be any location where sound absorption is required. For example, it can be applied to interior and exterior members of transportation means such as airplanes, ships and vehicles (automobiles, railcars) as well as buildings.

In particular, the method for constructing a sound absorbing structure according to the present embodiment makes it possible to provide sound absorption to members with complicated shapes, exfoliation hardly occurs under vibration, and workability is good. Therefore, the resin fiber layer obtained by the method for constructing a sound absorbing structure can preferably be applied to members constituting automobiles(pillars, deck sides, floor silencers, back door trims, etc.).

### EXAMPLES

In the following, the layered product of the present invention will be described in detail by Examples, but the present invention is not limited to these.

### « Production of Layered Product/Resin Fiber Layer»

As the hot-melt resin that constitutes the resin fiber layer, the following were used.
VESTOPLAST 807 (made by Evonik Industries AG, polyalphaolefin)
PES120L (made by TOAGOSEI CO., LTD., polyester)
PPET (made by TOAGOSEI CO., LTD., polyolefin)
DIABOND DH-672 (made by Diabond Industry co., Ltd., polyamide)
PP (made by Dong Chang Chemical Co., Ltd., polypropylene, MFR: 1500 g/10 min)
PP (made by Xiamen Keyuan Plastic Co., Ltd, polypropylene, MFR: 1500 g/10 min)

The substrate made of polypropylene (PP) was sprayed with a hot-melt resin, which was held and melted at 180 °C, and then the hot-melt resin was cooled and solidified at ordinary temperature, thereby obtaining layered products according to Examples 1-5 with the substrates and the resin fiber layers.

Component (hot-melt resin), thickness of the resin fiber layer, basis weight, fiber diameter, air permeability, storage modulus G', loss modulus G", loss tangent tanδ, and glass transition temperature of the resin fiber layer in each Example are shown in each table. An SEM photograph of fibers of the resin fiber layer in each Example is shown in each table.

Thickness, basis weight, fiber diameter and air permeability of the resin fiber layer were adjusted by changing the spraying condition (application time) and the nozzle diameter.

Regarding the thickness of the resin fiber layer, in accordance with the above-mentioned method, the initial thickness T_{A} and the thickness after holding T_{B} were measured, and the thickness reduction percentage was calculated.

As Comparative Example 1, a single layer of only the substate was prepared without providing the resin fiber layer.

### «Evaluation»

Each layered product of Examples 1-5 was evaluated in terms of adhesion between the substrate and the resin fiber layer and sound absorption coefficient. Comparative Example 1 was evaluated in terms of sound absorption coefficient.

### <Adhesion between Substrate and Resin Fiber Layer (Adhesion to PP)>

Fibers (hot-melt resin) other than those of the adhered portions were peeled off the substrate, and the area of the adhered portions (portions remaining after peeling the fibers off) was calculated with a microscope. The evaluation was conducted as follows.
A: The adhesion area is 80 % or more.
B: The adhesion area is 50 % or more and less than 80 %.
C: The adhesion area is 10 % or more and less than 50 %.
D: The adhesion area is less than 10 %.

### <Sound Absorption Coefficient>

Sound absorption coefficient was measured in accordance with JIS A 1405-2 as the average of n = 2 with a sample size of 28.9 φ, an incident surface of the fiber surface, and a target frequency of 4000 Hz. The evaluation was conducted as follows.
A: 0.6 or more and 1.0 or less
B: 0.5 or more and less than 0.6
C: 0.1 or more and less than 0.5
D: less than 0.1

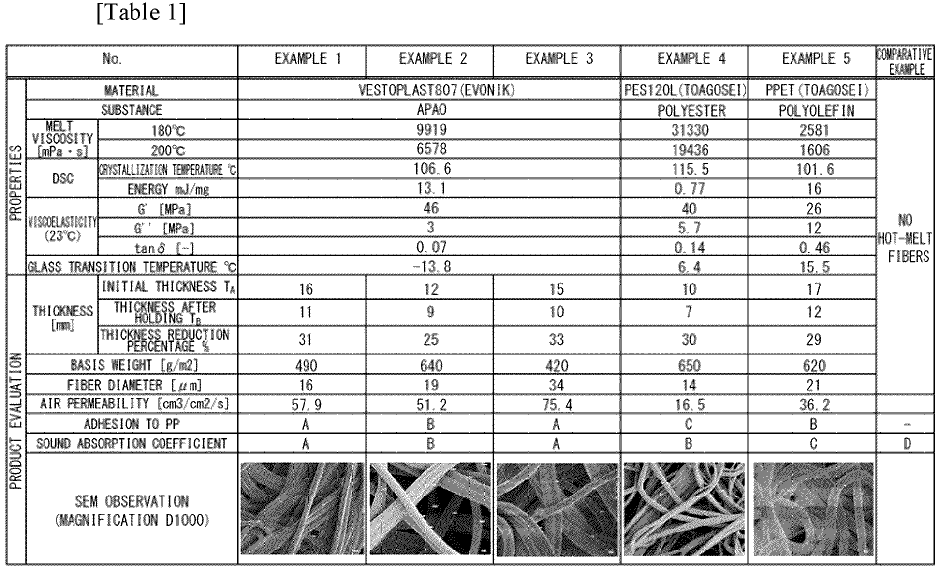

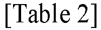

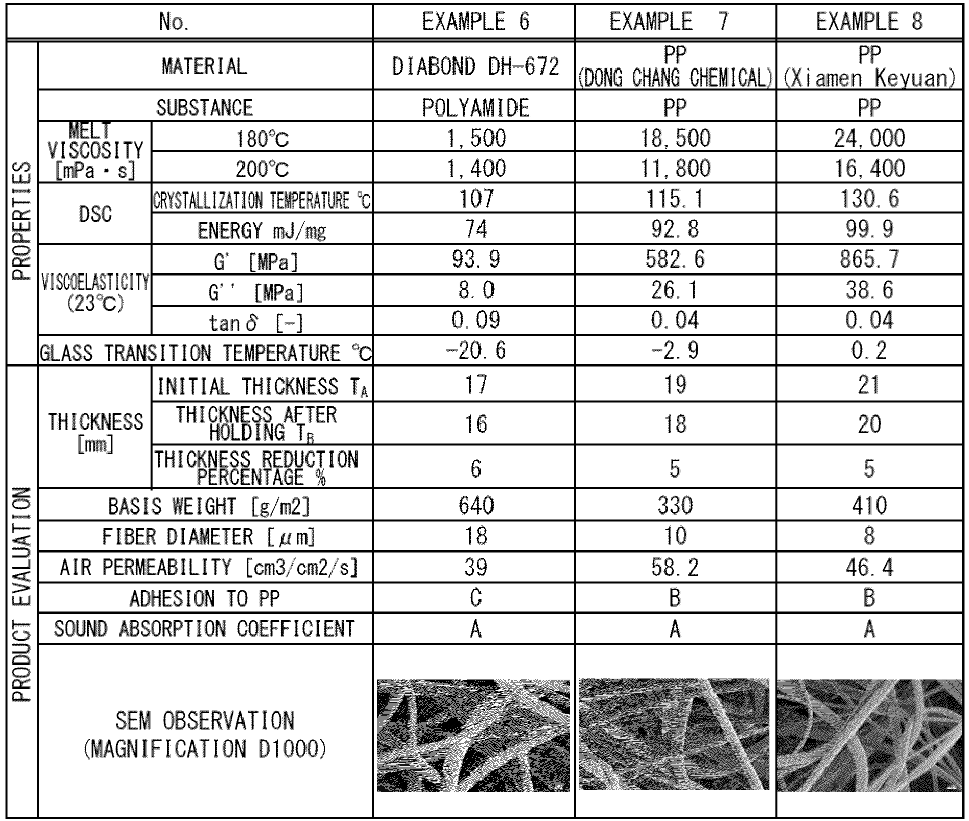

It is understood from the above results that the layered product with the resin fiber layer according to each Example has a good sound absorption. This resin fiber layer with a good sound absorption was obtained by only spraying the hot-melt resin under a melted condition onto an object. Therefore, it is understood that a method for constructing a sound absorbing structure according to each Example is superior in workability.

## Claims

1. A method for constructing a sound absorbing structure, comprising:
spraying an object with a hot-melt resin that is in a melted condition and has a melt viscosity of 200,000 mPa·s or less at 180 °C, thereby forming a resin fiber layer as a sound absorbing material.

2. A method for producing a layered product comprising a substrate and a resin fiber layer, the method comprising the step of:
forming the resin fiber layer by spraying a hot-melt resin onto the substrate wherein the hot-melt resin in a melted condition and has a melt viscosity of 200,000 mPa·s or less at 180 °C.

3. The layered product producing method according to claim 2, wherein the resin fiber layer is a sound absorbing material.

4. A sound absorbing material, comprising:
a resin fiber layer that is formed of a hot-melt resin having a melt viscosity of 200,000 mPa·s or less at 180 °C.

5. A layered product, comprising:
a resin fiber layer that is formed of a hot-melt resin having a melt viscosity of 200,000 mPa·s or less at 180 °C; and a substrate,
wherein the resin fiber layer is fused onto the substrate.
